# EUROPEAN PATENT SPECIFICATION

(11) **EP 1 465 321 B1**
(45) Date of publication and mention of the grant of the patent: **16.10.2013**
(21) Application number: 04014866.0
(22) Date of filing: 26.05.1998
(51) Int. Cl.: H02K 3/12, H02K 3/18, H02K 3/24, H02K 3/28, H02K 9/06, H02K 19/22

(54) **Stator winding arrangement of alternator for vehicle**
Wicklungsanordnung eines Ständers eines Wechselstromgenerators für Fahrzeuge
Disposition d'enroulement statorique d'un alternateur pour véhicules

(30) Priority: 26.05.1997 WO PCT/JP97/01778; 22.09.1997 WO PCT/JP97/03374; 26.09.1997 JP 27975097; 26.09.1997 JP 27975197; 26.09.1997 JP 27975297; 14.10.1997 JP 29788297; 24.10.1997 JP 30973197; 10.12.1997 JP 36206397; 10.02.1998 JP 4439098; 13.02.1998 JP 4904098
(43) Date of publication of application: 06.10.2004
(62) Divisional of application: 98109569.8
(73) Proprietor: DENSO CORPORATION, Kariya-city, Aichi-pref. 448-8661 (JP)
(72) Inventor: Umeda, Atsushi, Kariya-city Aichi-pref. 448-8661 (JP); Shiga, Tsutomu, Kariya-city Aichi-pref. 448-8661 (JP); Kusase, Shin, Kariya-city Aichi-pref. 448-8661 (JP)
(74) Representative: Winter, Brandl, Fürniss, Hübner, Röss, Kaiser, Polte - Partnerschaft

(56) References cited:
- WO-A-92/06527
- GB-A- 1 388 512
- US-A- 4 028 572
- US-A- 5 097 167
- PATENT ABSTRACTS OF JAPAN vol. 018, no. 414 (E-1587), 3 August 1994 (1994-08-03) -& JP 06 121497 A (TOSHIBA CORP), 28 April 1994 (1994-04-28)
- PATENT ABSTRACTS OF JAPAN vol. 006, no. 064 (E-103), 23 April 1982 (1982-04-23) -& JP 57 006551 A (NIPPON DENSO CO LTD), 13 January 1982 (1982-01-13)
- PATENT ABSTRACTS OF JAPAN vol. 010, no. 095 (E-395), 12 April 1986 (1986-04-12) & JP 60 237831 A (NIPPON DENSO KK), 26 November 1985 (1985-11-26)
- PATENT ABSTRACTS OF JAPAN vol. 015, no. 397 (E-1120), 8 October 1991 (1991-10-08) -& JP 03 159549 A (NIPPONDENSO CO LTD), 9 July 1991 (1991-07-09)
- PATENT ABSTRACTS OF JAPAN vol. 015, no. 157 (E-1058), 19 April 1991 (1991-04-19) -& JP 03 027748 A (NIPPONDENSO CO LTD), 6 February 1991 (1991-02-06)
- PATENT ABSTRACTS OF JAPAN vol. 012, no. 281 (E-641), 2 August 1988 (1988-08-02) -& JP 63 059744 A (MITSUBA ELECTRIC MFG CO LTD), 15 March 1988 (1988-03-15)

## Description

### BACKGROUND OF THE INVENTION

### 1. Field of the Invention

The present invention relates to an alternator driven by an engine which is mounted in a vehicle, a truck or a boat.

### 2. Description of the Related Art

As disclosed in JP-A-56-98358, a rotor having a mixed flow fan on one end thereof for sending cooling air in the axial direction to cool the inner periphery of a stator and the rotor.

WO92/06527 discloses a stator winding of an alternator for a vehicle. The stator winding is composed of a plurality of conductor segments, each of which can be disposed more regular than a stator winding composed of a continuously wound wire.

Although the mixed flow fan of the structure disclosed in JP-A-56-98358 provides axially flowing air, the stator winding composed of the continuously wound wire has irregularly wavy surfaces which obstructs the air flow. Therefore, effective cooling can not be attained.

According to WO92/06527, although coil ends are arranged to be regular, the coil ends are not arranged to be suitable for axial flow of the cooling air. Therefore, the air flow along surfaces thereof is obstructed.

Document JP-A-57 006551 describes an AC generator for a vehicle, wherein a slanted flow or centrifugal fan for supplying cooling air is attached to the end face of a rotor. Cooling air exhausting windows which are slanted in the direction of the diameter are formed at the positions corresponding to the fan on a stator frame so that their slanted angle is aligned with the angle of the fan. Furthermore, the shape of a coil end part of a stator coil is formed so that it is aligned with the angle of the fan.

Document JP-A-03 027748 discloses an AC generator for a vehicle, wherein a stator is formed by making a stator coil into wave winding and further making the straight part, which is projected from each slot when the stator coil is inserted into a stator core, into stranded winding along the flow of cooling air, and is made by inserting the stator coil into each slot of the stator core thereafter.

Document EP-A-0 634 829 discloses an AC generator for vehicles, wherein cooling wind blown from a centrifugal fan flows into a numerosity of cooling windows which surround the centrifugal fan. The cooling windows are separated in the circumferential direction by support parts or guide wall parts. The angle of inclination of the guide wall part against the radial direction is set to be larger in the vicinity of the forward end of the support part in the rotating direction and smaller in the vicinity of the backward end of the support part in the rotating direction.

Document JP-A-56 098 358 discloses an AC generator for a vehicle, wherein both sides of two end frames are inclined in an approximately conical shape, so that the space between the surface of the frame and pawl cores becomes gradually narrow as they approach the outer periphery. The blades of fans are tapered along the profile of the side surface of the frame with some distance of the gap being provided between the side surface of the frame and the blades. In the vicinity of bearings on both sides of the end frames suction windows are formed so that the cooling wind can be inhaled into the inside of the generator.

### SUMMARY OF THE INVENTION

An object of the present invention is to provide effective axial cooling air flow and
to provide an improved structure of coil ends of the stator and rotor which provides high cooling performance with low noises without addition of any parts.

The object is solved by the features of independent claim 1. The dependent claims are directed to preferred embodiments of the invention.

For example, the inclined conductor segments extend in the direction 60 ° in angle from the axial direction of the cooling air and 30 ° in angle from the rotating direction. Both inclination angles for effective supply of the cooling medium are decided according to the ratio between the axial direction of the cooling medium and the rotating direction.

The cooling medium supplied by means for supplying cooling air and flowing in one way axial direction inside the coil ends is affected by the rotation of the rotor to contain the component of the rotating direction. Therefore, the cooling air is apt to flow in spiral.

### BRIEF DESCRIPTION OF THE DRAWINGS

Other objects, features and characteristics of the present invention as well as the functions of related parts of the present invention will become clear from a study of the following detailed description, the appended claims and the drawings. In the drawings:
Fig. 1 is a cross-sectional view of a main portion of an alternator for a vehicle according to a first embodiment of the present invention;
Fig. 2 is a outside view of a stator according to the first embodiment;
Fig. 3 is a perspective view of a conductor segment according to the first embodiment;
Fig. 4 is a fragmentary sectional view of the stator according to the first embodiment;
Fig. 5 is a perspective view of coil ends at opposite ends of the stator according to the first embodiment;
Fig. 6 is a winding diagram of a stator winding according to the first embodiment from first to 48 th slots;
Fig. 7 is a winding diagram of the stator according to the first embodiment from 49 th to 96 th slots;
Fig. 8 is a circuit diagram of the alternator according to the first embodiment;
Fig. 9 is a front view of a fan of a rotor according to the first embodiment;
Fig. 10 is a front view of the other fan of the rotor according to the first embodiment;
Fig. 11 is a fragmentary cross-sectional view of a stator according to another embodiment;
Fig. 12 is a fragmentary perspective view of the stator of another embodiment; and
Fig. 13 is a cross-sectional view of a main portion of an alternator for a vehicle according to another embodiment.

### DETAILED DESCRIPTION OF THE PREFERRED EMBODIMENTS

### (First Embodiment)

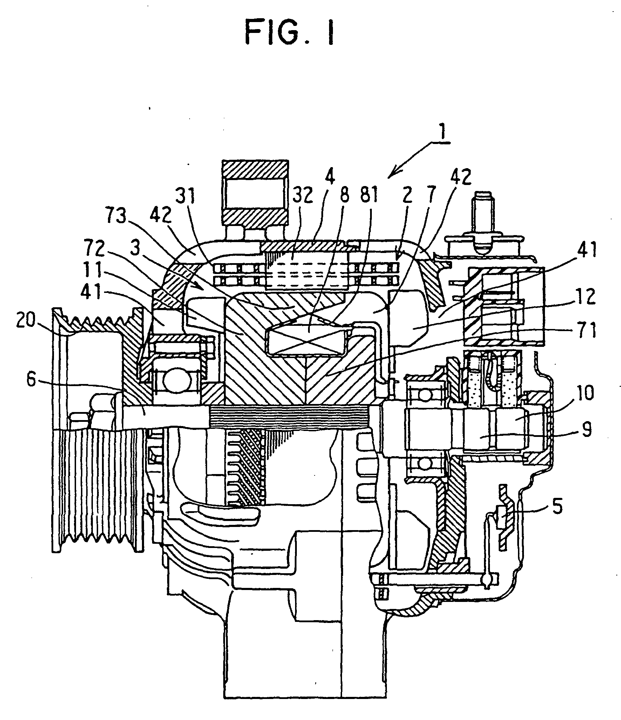

An alternator for a vehicle according to a first embodiment of the present invention is described with reference to Figs. 1-10.

Alternator 1 is composed of stator 2, rotor 3, frame 4 for supporting stator 2 and rotor 3 and rectifier 5 for converting as power to dc power. Rotor 3 rotates with shaft 6 and has Lundell type pole cores 7, field coil 8, slip rings 9, 10, mixed flow fan 11 and centrifugal fan 12. Shaft 6 is connected to pulley 20 which is driven by an engine (not shown) mounted on a vehicle.

Pole core 7 is composed of a pair of pole core members. Each of the pole core members is composed of boss portion 71 fitted to shaft 6, disk portion 72 extending radially from boss portion 71 and a plurality of claw poles 73. Field coil 8 is fitted to the inner periphery of claw poles 73 via insulation sheet 81. Insulation sheet 81 is composed of a sheet impregnated with insulation resin, which is heated and bonded to field coil 8 to insulate field coil 8 from pole core 7.

Frame 4 has air discharge windows 42 at portions opposite coil ends 31 of stator 2 and air intake windows 41 at the ends thereof. Stator 2 is composed of stator core 32, conductor segments 33 forming the stator winding and insulator 34 for insulating conductor segments 33 from stator core 32, and is supported by frame 4. Stator core 32 is composed of laminated steel sheets and has a plurality of slots 35 at the inner periphery thereof.

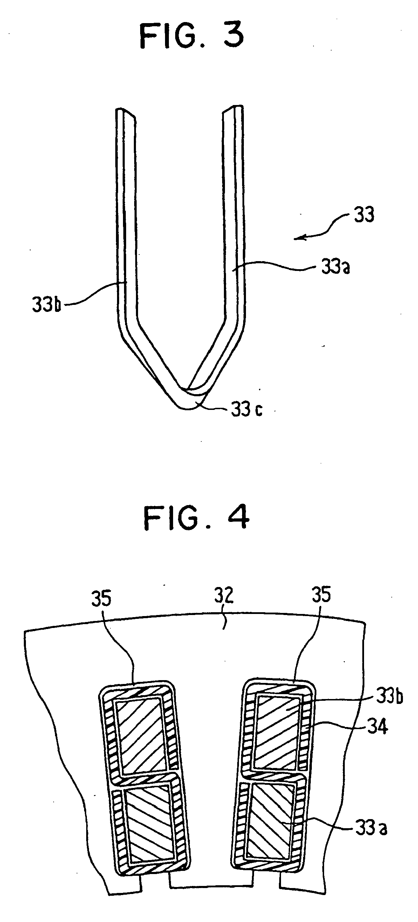

Two conductor segments 33 having rectangular cross-section are inserted into each of slots 35, and the stator winding is composed of a plurality of conductor segments 33, one of which is illustrated in Fig. 3, connected to one another. The shape of the cross-section of the conductor is a rectangle having the longer sides in the radial direction than the sides in the circumferential direction.

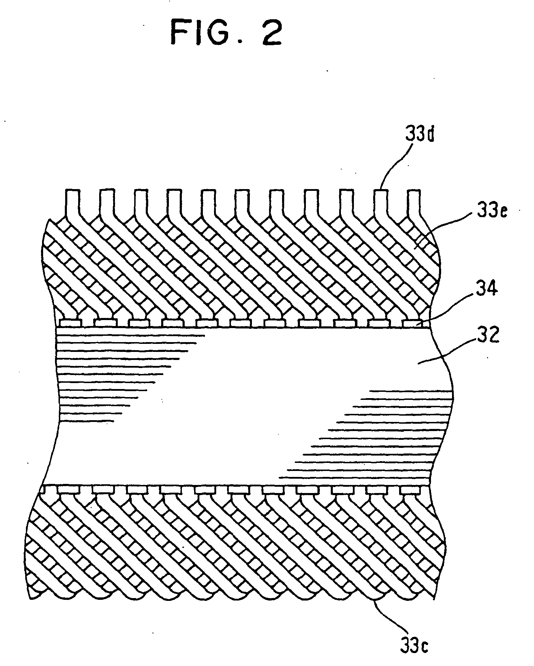

As shown in Fig. 2, U-turn portions 33c are disposed on one axial end of stator core 32, and joint portions 33d are disposed on the other end thereof. Inclined portions of the coil ends of conductor segments 33 in the outer layer are inclined oppositely to those in the inner layer. The inclination angle is the same in the same layer. Insulation coating is not always necessary for conductor segments 33.

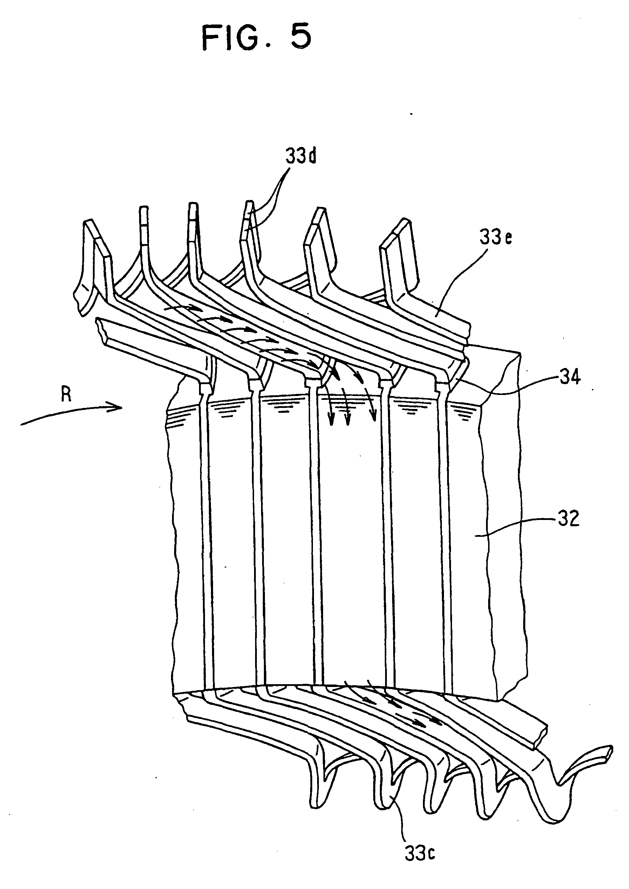

Manufacturing of the stator winding is as follows. Each of U-shaped conductor segments 33 is composed of conductor portion 33b to be disposed in the outer layer, conductor portion 33a to be disposed in the inner layer and U-turn portion 33c. U-shaped conductor segments 33 are placed so that U-turn portions 33c are disposed on the same axial end of stator core 32. As shown in Fig. 4, conductor portions 33b in the outer layer are inserted into the rear side of the slots, and conductor portions 33a in the inner layer are inserted into the front side of the slot. Each of conductor segment 33 is formed from a copper plate, which is bent and shaped into a U-shape by a press machine or the like. Each of the conductor portions is press-fitted between parallel side walls of the outer layer or inner layer of corresponding slots via insulator 34. As shown in Fig. 5, end portions 33d formed opposite coil end 31 formed by U-turn portion 33c are bent outward in the circumference from each other

In this embodiment, the rotor has 16 poles, and stator core 32 has 96 slots. Conductor segments 33 are connected to form a three-phase winding.

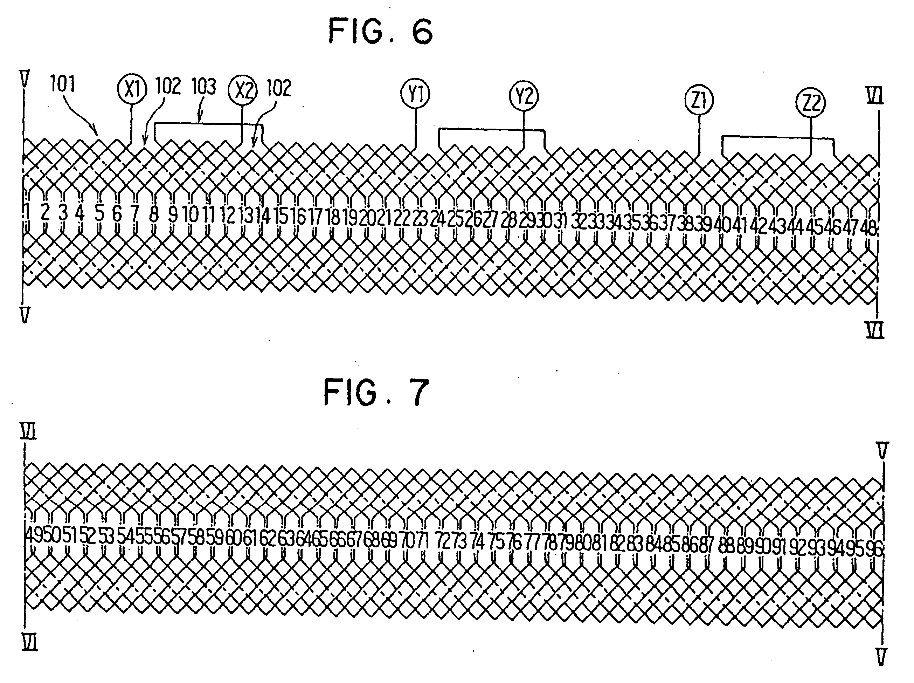

Figs. 6, 7 and 8 illustrate an example of the winding. Solid lines represent conductor segments 33 disposed in the outer layer, and one-dot chain lines represent conductor segments 33 disposed in the inner layer.

Firstly, an X-phase winding is described hereafter. The slots numbered with 4, 10, 16 and the every successive sixth slot to the slot numbered with 94 form a first slot group. The slots numbered with 5, 11, and 17 and the every successive sixth slot to the slot numbered with 95 form a second slot group. A first winding starting from terminal X1 is formed in the first slot group and connected in series to a second winding by one of joint portions 102 as shown in Fig. 6. The second winding is turned over by conductor portion 103 disposed in the same layer so that the conductor segments 33 of the same phase winding disposed in the same slot can be connected in series. The second winding is also connected in series with the first winding ending at terminal X2 by the other of joint portions 102.

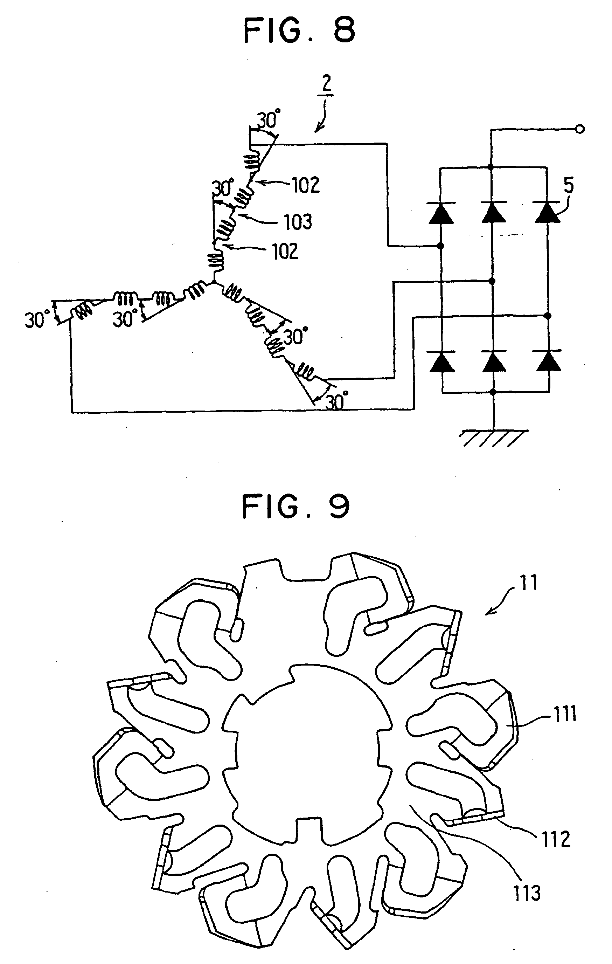

Thus, the X-phase winding is composed of a pair of series-connected stator windings whose phase angle are 30° in electric-angle different from each other. Y-phase and Z-phase windings are also composed of stator windings in the same manner and disposed, respectively, in the stator core at 120° pitch in electric angle, thereby forming a three-phase star winding shown in Fig. 8.

Pulley-side cooling fan 11 has a plurality of blades 111 slanting to base plate 113 and a plurality of blades 112 perpendicular to base plate 113 as shown in Fig. 9. A plurality of blades 111 are slanted at an acute angle to base plate 112 against the rotating direction R. Base plate 113 is welded to the end surface of pole core 7 to be rotatable with rotor 3. Counter-pulley-side cooling fan 12 has a plurality of perpendicular blades 121 and no other blades.

Fig. 5 is a perspective view illustrating inclined conductor segments 33 of coil ends 31 disposed on the inner circumference and the rotating direction R of rotor 3. Viewing from the side of pulley 20, rotor 3 rotates clockwise.

With the above-described structure, inclined portions 33e of coil ends 31 incline in the same direction in the same layer, so that a plurality of the stator windings can be disposed without interference with one another. Accordingly, regular continuous patterns are formed in inner circumference of the coil ends 31 instead of substantially uneven portions. Because the conductor segments 33 on the inner circumference of coil ends 31 incline in the same direction at opposite ends of stator core 32, cooling air flows along the same direction. Therefore, it is possible to reduce noises generated when the cooling air sent from cooling fans 11, 12 blows on the inner circumference of coil-ends.

As shown in Fig. 5, an annularly-disposed conductor segments 33 of the inner circumference of coil ends 31 incline along the cooling air flow in the forward rotating direction R of rotor 3. The cooling air, which is driven by fan 11 to flow along the inner circumference of coil ends 31 in one-way axial direction, is drawn by the rotation of rotor 3 to include a component of the rotating direction R. Thus, the cooling air flows in a spiral or whirl.

In other words, the inclined portions of coil ends 31 guide the cooling air to flow in the axial direction more effectively as indicated by arrows in Fig. 5.

Because rotor 3 is provided with spaces between contiguous adjacent two of the pole cores, field coil 8 can be cooled by the axially flowing cooling air. Forward direction used here is a direction between the direction of the cooling air flowing in the axial direction and rotating direction R of rotor 3.

Cooling fan 11 on the side of pulley 20 has a plurality of slanted blades 111. When rotor 3 rotates in direction R in Fig. 9, blades 111 drive the cooling air in the axial direction. Thus, the strong cooling air in the rotating direction can be supplied along the inner circumference of coil ends 31 without obstructing the air flow in the axial direction. As a result, the cooling air in the axial direction is increased to increase the cooling effect and the output power.

The cooling air is taken in from the side of the pulley 20 where ambient temperature is lower, and the temperature of the axial flow can be lowered so that field coil 8 can be cooled effectively.

The number of slots is six times as many as the number of the poles of rotor 3, and the conductor segments 33 in the adjacent slots 35 are connected in series.

The following structure is available instead of the above-described structure. It is preferable that each coil end is spaced apart from each other, and that the cooling-air passages are formed in the radial direction to be transverse to the coil-end groups. However, the coil ends can be coated with resin to close gaps between the coil ends as far as there are convex-concave patterns due to the inclined portions of the conductor segments 33 inside the coil ends

Two coil ends 31 are formed from joint portions 33d if S-shaped segments 33, each of which corresponds to a half portion of the U-shaped segment shown in Fig. 3, are used instead of U-shaped segment. The joint portions of the two segments 33 are substituted for U-turn portion 33c.

It is possible to insert two or more conductor segments 33 in each of slots 35. In other words, four or more conductor segments 33 can be inserted into each of slots 35 to increase the number of turns of the stator winding.

### (Second Embodiment)

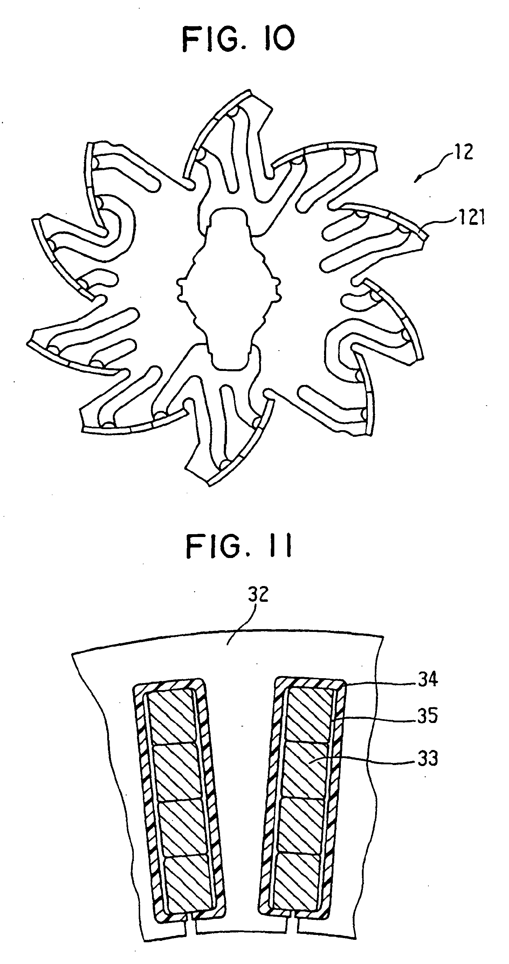

An alternator according to a second embodiment is described with reference to Figs. 11-13.

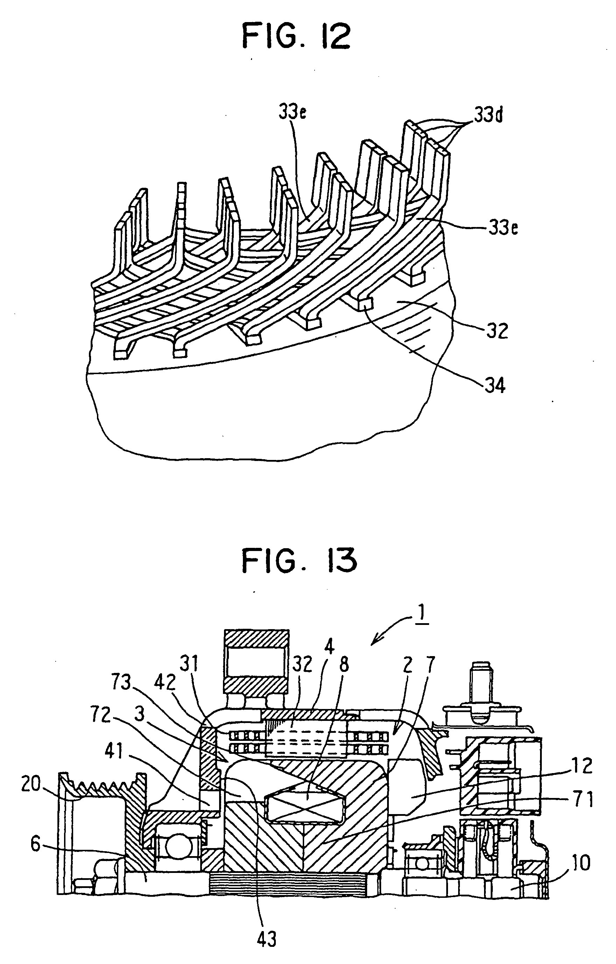

As shown in Fig. 11, four conductor segments 33 are inserted into each of slots 35 to align in the radial direction. Conductor segments 33 covered with insulation coating are inserted, and an insulation sheet is disposed between a bundle of conductor segments 33 and the wall of slot 35. Joint portions of this structure are shown in Fig. 12. Each of four conductor segments 33 in each slot 35 extends oppositely from each other in the circumferential direction. The end portions 33d of conductor segments 33 in one slot are connected to the end portions 33d of connectors in other slots. As shown in Fig. 12, the innermost conductor segments 33 are connected to the conductor segments 33 in the second layer, and the conductor segments 33 in the third layer are connected to the conductor segments 33 in the outermost circumference of the coil-end groups. Accordingly, a plurality of joint portions 33d are disposed annularly in two layers, inner layer and outer layer. In other words, a plurality of joint portions 33d are spaced apart from one another in both circumferential direction and radial direction. In this structure, the incline direction of the conductor segments 33, rotating direction R of rotor 3 and axial component of the cooling air flow in the coil-end groups are arranged so that the conductor segments 33 in the innermost circumference of the coil-end groups can be inclined in the forward direction with respect to the axial direction and the rotating direction R.

In addition to the conductor segments 33 of the innermost circumference, the conductor segments 33 of the circumference second therefrom can be inclined in the forward direction with respect to the axial direction and the rotating direction R.

The conductor segments 33 can be disposed in the circumference direction also. For example, four conductor segments 33 can be disposed squarely, and bare conductor segments 33, conductor segments 33 having square or elliptic cross-section can be used also. In order to let the cooling air to flow easily, it is preferable to select the shape of the cross-section of the conductor segments 33 and disposition thereof in the inner circumference of the coil-end groups. For example, the conductor segments 33 are selected to have grooves having sufficient depth and width on the inner circumference of the coil-end groups.

In this embodiment, cooling fans 11, 12 are disposed on the opposite sides of rotor 3. However, such fans can be omitted if temperature rise is not so high. In this case, the side walls of the disk portions 72 of pole core 7 function as centrifugal fan blades so that the centrifugal cooling air can be modified to axial cooling air by the inclined portions of the conductor segments 33 of the inner circumference of the coil ends.

As shown in Fig. 13, the pulley-side end of rotor without fan 11 can be disposed close to the pulley-side inner wall 43 of frame 4 around intake windows 41. Thus, inner wall 43 functions as a fan shroud to increase the fan effect of the disk portions 72 of the pole core, thereby increasing the axial air flow. Thus, the cooling effect of the field coil can be increased without increasing the number of parts and work time.

If the ambient temperature around the pulley 20 is comparatively high, cooling fan 12 disposed at the side opposite pulley 20 can be provided with fan blades for driving cooling air axially inside and also inclined portions of the conductor segments 33 of the inner circumference of coil ends 31 can be extended in the opposite direction. Thus, the structure can be applied so that the cooling air is taken from the side where the ambient temperature is comparatively low according to the circumstances. That is, the rotating direction R of rotor 3 and incline direction of the coil ends are selected to supply the cooling air from the side where the ambient temperature is comparatively low. Thus, temperature of the axial cooling air flow can be lowered to cool magnetic field coil 8 effectively.

In the foregoing description of the present invention, the invention has been disclosed with reference to specific embodiments thereof. It will, however, be evident that various modifications and changes may be made to the specific embodiments of the present invention without departing from the scope of the appended claims. Accordingly, the description of the present invention in this document is to be regarded in an illustrative, rather than restrictive, sense.

## Claims

1. Alternator for a vehicle, comprising:
a stator (2) having a cylindrical stator core (32) and a stator winding that extends from opposite ends of said stator core (32); wherein
said stator core (32) comprises a plurality of slots (35),
said stator winding is composed of a plurality of conductor segments (33), each of which comprises conductor portions (33a, 33b) disposed in respective ones of said slots (35) so as to align in a radial direction and extending from opposite ends of said stator core (32), and
a plurality of said conductor portions (33a) are disposed at an inner circumference of said stator winding and another plurality of said conductor portions (33b) are disposed at an outer circumference of said stator winding,
a rotor (3) supported by said stator (2) via a shaft (6) to be disposed within said stator (2);
a pulley (20) fixed to one end of said shaft (20) to be rotatable with said rotor (3); and
means (11) for supplying cooling air along an inner circumference of said stator winding in an axial direction from the side of said pulley (20), wherein
each of said plurality of said conductor portions (33a) disposed at the inner circumference of said stator winding has a surface that inclines along a direction between said axial direction and the direction (R) of rotor rotation thereby guiding the cooling air along said plurality of said conductor portions (33a) disposed at the inner circumference of said stator winding from the end of said stator core (32) on the side of said pulley (20) to the other side of said stator core (32).

2. Alternator as claimed in claim 1, wherein said means (11, 12) for supplying cooling air supplies said cooling air to both said plurality of said conductor portions (33a) disposed at the inner circumference of said stator winding and the inner circumference of said stator core (32).

3. Alternator as claimed in claim 1, wherein said means (11) for supplying cooling air has a plurality of blades disposed at an end of said rotor (3) radially inside the respective coil ends.

4. Alternator as claimed in any of the preceding claims, wherein said plurality of said conductor portions (33a) disposed at the inner circumference of said stator winding and extending from the other end of said stator core (32) opposite to the one end extend in the direction between said given axial direction and the direction (R) of rotor rotation.

5. Alternator as claimed in any of the preceding claims, wherein said cooling passages are arranged to draw cooling air in a one-way direction.

6. Alternator as claimed in any of the preceding claims, wherein one of said conductor portions (33a, 33b) is disposed in each of said slots (35).

7. Alternator as claimed in claim 1, wherein:
said conductor portions (33a, 33b) are disposed in inner and outer layers in said slots respectively;
each of said plurality of conductor portions (33a) disposed at said inner circumference of said stator winding is connected to a respective one of said plurality of conductor portions (33b) disposed at said outer circumference of said stator winding; and
each of said plurality of conductor portions (33a) disposed at said inner circumference of said stator winding is disposed in said inner layer of one of said slots and its respective one of said plurality of conductor portions (33b) disposed at said outer circumference of said stator winding is disposed in said outer layer of another of said slots (35).

8. Alternator as claimed in any of the preceding claims, wherein:
said rotor (3) is a magnetic field rotor (3) having a pole core (7) and a field coil (8); and
said stator (2) includes a multi-phase stator winding disposed in said slots (35).

9. Alternator as claimed in any of the preceding claims, wherein said means for supplying cooling air comprises cooling fans (11, 12) having a plurality of fan blades (111, 112) respectively disposed on opposite ends of said rotor (3).

10. Alternator as claimed in claim 9, wherein a plurality (111) of said fan blades (111, 112) of one of said cooling fans (11, 12) are inclined at an acute angle to the axis of said rotor (3) to drive cooling air in both axial and radial directions.

11. Alternator as claimed in claim 9 or 10 wherein said pulley (20) is disposed on the same side as said one of said cooling fans (11, 12).

12. Alternator as claimed in claim 9 or 10, wherein said pulley (20) is disposed on the opposite side of said one of said cooling fans (11, 12).

13. Alternator as claimed in any of the preceding claims, wherein:
each conductor segment consists of a pair of said conductor portions (33a, 33b);
said conductor portions (33a, 33b) are disposed in said slots (35) in annular layers around the axis (6) of said rotor (3); and
respective conductor portions (33a, 33b) of each pair of said conductor portions (33a, 33b) are disposed in adjacent ones of said annular layers and in different slots (35).

14. Alternator as claimed in claim 13, wherein said respective conductor portions (33a, 33b) of each pair of said conductor portions (33a, 33b) are connected via a U-turn portion (33c).

15. Alternator as claimed in claim 13, wherein:
each pair of said conductor portions (33a, 33b) is connected, via respective joint portions (33d) thereof, to a conductor portion (33a, 33b) belonging to another pair of said conductor portions (33a, 33b) and disposed in an adjacent one of said annular layers, thus forming a plurality of joint portions (33d); and
said joint portions (33d) are disposed spaced and apart from each other in the circumferential direction.

16. Alternator as claimed in any of the preceding claims, wherein:
a pair of said conductor portions (33a, 33b) is disposed in inner and outer layers in said slots (35),
said slots (35) are disposed at 30° in electric angle and grouped into first and second slot groups (35) next to each other,
portions of said conductor portions (33a, 33b) in said first slot group composed of slots (35) spaced apart one slot pitch with each other are connected in series to form a first series-connected group,
other portions of said conductor portions (33a, 33b) in said second slot group are connected in series to form a second series-connected group, and
a first phase winding is composed of said first and second series-connected groups connected in series to each other.

## Patentansprüche

1. Wechselstromgenerator für ein Fahrzeug, der aufweist:
einen Stator (2), der einen zylindrischen Statorkern (32) und eine Statorwicklung aufweist, die sich von gegenüberliegenden Enden des Statorkerns (32) erstreckt; wobei
der Statorkern (32) mehrere Schlitze (35) aufweist,
die Statorwicklung aus mehreren Leitersegmenten (33) besteht, die jeweils Leiterabschnitte (33a, 33b) aufweisen, die in einem jeweiligen Schlitz der Schlitze (35) derart angeordnet sind, dass sie in einer radialen Richtung ausgerichtet sind und sich von gegenüberliegenden Enden des Statorkerns (32) erstrecken, und
wobei mehrere der Leiterabschnitte (33a) auf einem Innenumfang der Statorwicklung angeordnet sind und mehrere andere Leiterabschnitte (33b) an einem Außenumfang der Statorwicklung angeordnet sind,
einen Rotor (3), der von dem Stator (2) über eine Welle (6), die innerhalb des Stators (2) anzuordnen ist, getragen wird;
eine Antriebsscheibe (20), die an einem Ende der Welle (20) mit dem Rotor (3) drehbar fixiert ist; und
eine Einrichtung (11) zum Zuführen von Kühlluft entlang einem Innenumfang der Statorwicklung in einer axialen Richtung von der Seite der Antriebsscheibe (20), wobei
jeder der Leiterabschnitte (33a), die an dem Innenumfang der Statorwicklung angeordnet sind, eine Oberfläche aufweist, die entlang einer Richtung zwischen der axialen Richtung und der Richtung (R) einer Rotordrehung geneigt ist, wodurch die Kühlluft entlang den Leiterabschnitten (33a), die an dem Innenumfang der Statorwicklung angeordnet sind, von dem Ende des Statorkerns (32) auf der Seite der Riemenscheibe (20) zu der anderen Seite des Statorkerns (32) geleitet wird.

2. Wechselstromgenerator nach Anspruch 1, wobei die Einrichtung (11, 12) zum Zuführen von Kühlluft den Leiterabschnitten (33a), die an dem Innenumfang der Statorwicklung angeordnet sind, und denjenigen, die an dem Innenumfang des Statorkerns (32) angeordnet sind, die Kühlluft zuführt.

3. Wechselstromgenerator nach Anspruch 1, wobei die Einrichtung (11) zum Zuführen von Kühlluft mehrere Blätter aufweist, die an einem Ende des Rotors (3) radial innerhalb der jeweiligen Spulenenden angeordnet sind.

4. Wechselstromgenerator nach einem der vorhergehenden Ansprüche, wobei sich die Leiterabschnitte (33a), die an dem Innenumfang der Statorwicklung angeordnet sind und sich von dem anderen Ende des Statorkerns (32) gegenüber von dem einen Ende erstrecken, in der Richtung zwischen der gegebenen axialen Richtung und der Richtung (R) einer Rotordrehung erstrecken.

5. Wechselstromgenerator nach einem der vorhergehenden Ansprüche, wobei die Kühlpassagen angeordnet sind, Kühlluft in einer Einweg-Richtung zu ziehen.

6. Wechselstromgenerator nach einem der vorhergehenden Ansprüche, wobei einer der Leiterabschnitte (33a, 33b) in jedem der Schlitze (35) angeordnet ist.

7. Wechselstromgenerator nach Anspruch 1, wobei
die Leiterabschnitte (33a, 33b) jeweils in Innen- und Außenschichten der Schlitze angeordnet sind;
jeder der Leiterabschnitte (33a), die an dem Innenumfang der Statorwicklung angeordnet sind, mit einem jeweiligen Leiterabschnitt (33b), der an dem Außenumfang der Statorwicklung angeordnet ist, verbunden ist; und
jeder der Leiterabschnitte (33a), die an dem Innenumfang der Statorwicklung angeordnet sind, in der inneren Schicht einer der Schlitze angeordnet ist und deren jeweiliger Leiterabschnitt (33b), der an dem Außenumfang der Statorwicklung angeordnet ist, in der äußeren Schicht eines anderen der Schlitze (35) angeordnet ist.

8. Wechselstromgenerator nach einem der vorhergehenden Ansprüche, wobei
der Rotor (3) ein Magnetfeldrotor (3) ist, der einen Polkern (7) und eine Feldspule (8) aufweist; und
der Stator (2) eine Mehrphasenstatorwicklung enthält, die in den Schlitzen (35) angeordnet ist.

9. Wechselstromgenerator nach einem der vorhergehenden Ansprüche, wobei die Einrichtung zum Zuführen von Kühlluft Kühllüfter (11, 12) aufweist, die mehrere Lüfterblätter (111, 112) aufweisen, die jeweils auf gegenüberliegenden Enden des Rotors (3) angeordnet sind.

10. Wechselstromgenerator nach Anspruch 9, wobei mehrere (111) der Lüfterblätter (111, 112) von einem der Kühllüfter (11, 12) mit einem spitzen Winkel zu der Achse des Rotors (3) geneigt sind, um Kühlluft in axialer und radialer Richtung zu führen.

11. Wechselstromgenerator nach Anspruch 9 oder 10, wobei die Antriebsscheibe (20) auf derselben Seite wie der eine der Kühllüfter (11, 12) angeordnet ist.

12. Wechselstromgenerator nach Anspruch 9 oder 10, wobei die Riemenscheibe (20) auf der gegenüberliegenden Seite des einen der Kühllüfter (11, 12) angeordnet ist.

13. Wechselstromgenerator nach einem der vorhergehenden Ansprüche, wobei
jedes Leitersegment aus einem Paar der Leiterabschnitte (33a, 33b) besteht;
die Leiterabschnitte (33a, 33b) in den Schlitzen (35) in ringförmigen Schichten um die Achse (6) des Rotors (3) angeordnet sind; und
jeweilige Leiterabschnitte (33a, 33b) jedes Paars der Leiterabschnitte (33a, 33b) in benachbarten ringförmigen Schichten und in unterschiedlichen Schlitzen (35) angeordnet sind.

14. Wechselstromgenerator nach Anspruch 13, wobei die jeweiligen Leiterabschnitte (33a, 33b) jedes Paars der Leiterabschnitte (33a, 33b) über einen U-Biegungsabschnitt (33c) verbunden sind.

15. Wechselstromgenerator nach Anspruch 13, wobei
jedes Paar der Leiterabschnitte (33a, 33b) über jeweilige Verbindungsabschnitte (33d) mit einem Leiterabschnitt (33a, 33b) verbunden ist, der zu einem anderen Paar der Leiterabschnitte (33a, 33b) gehört und in einer benachbarten ringförmigen Schicht angeordnet ist, womit mehrere Verbindungsabschnitte (33d) ausgebildet sind; und
die Verbindungsabschnitte (33d) in der Umfangsrichtung zueinander beabstandet und getrennt angeordnet sind.

16. Wechselstromgenerator nach einem der vorhergehenden Ansprüche, wobei ein Paar der Leiterabschnitte (33a, 33b) in inneren und äußeren Schichten in den Schlitzen (35) angeordnet ist,
die Schlitze (35) mit einem elektrischen Winkel von 30° angeordnet und in erste und zweite Schlitzgruppen (35) anschließend aneinander gruppiert sind,
Abschnitte der Leiterabschnitte (33a, 33b) in der ersten Schlitzgruppe, die aus Schlitzen (35) besteht, die um einen Schlitzabstand voneinander getrennt sind, in Serie geschaltet sind, um eine erste seriengeschaltete Gruppe auszubilden,
andere Abschnitte der Leiterabschnitte (33a, 33b) in der zweiten Schlitzgruppe in Serie geschaltet sind, um eine zweite seriengeschaltete Gruppe auszubilden, und
eine erste Phasenwicklung aus den ersten und zweiten seriengeschalteten Gruppen, die in Serie geschaltet sind, besteht.

## Revendications

1. Alternateur pour un véhicule, comprenant :
un stator (2) ayant un noyau de stator cylindrique (32) et un enroulement de stator qui s'étend à partir d'extrémités opposées dudit noyau de stator (32) ; où
ledit noyau de stator (32) comprend une pluralité de fentes (35),
ledit enroulement de stator est composé d'une pluralité de segments de conducteur (33), dont chacun comprend des parties de conducteur (33a, 33b) disposées dans des fentes respectives desdites fentes (35) de manière à s'aligner dans une direction radiale et s'étendant à partir d'extrémités opposées dudit noyau de stator (32), et
une pluralité desdites parties de conducteur (33a) sont disposées au niveau d'une circonférence interne dudit enroulement de stator et une autre pluralité desdites parties de conducteur (33b) sont disposées au niveau d'une circonférence externe dudit enroulement de stator,
un rotor (3) supporté par ledit stator (2) par l'intermédiaire d'un arbre (6) devant être disposé à l'intérieur dudit stator (2) ;
une poulie (20) fixée à une extrémité dudit arbre (20) pour pouvoir tourner avec ledit rotor (3) ; et
un moyen (11) destiné à fournir de l'air de refroidissement le long d'une circonférence interne dudit enroulement de stator dans une direction axiale à partir du côté de ladite poulie (20), où
chacune de ladite pluralité desdites parties de conducteur (33a) disposées au niveau de la circonférence interne dudit enroulement de stator présente une surface qui s'incline le long d'une direction entre ladite direction axiale et la direction (R) de rotation du rotor guidant ainsi l'air de refroidissement le long de ladite pluralité desdites parties de conducteur (33a) disposées au niveau de la circonférence interne dudit enroulement de stator à partir de l'extrémité dudit noyau de stator (32) sur le côté de ladite poulie (20) à l'autre côté dudit noyau de stator (32).

2. Alternateur tel que revendiqué dans la revendication 1, dans lequel ledit moyen (11, 12) destiné à fournir de l'air de refroidissement fournit ledit air de refroidissement à la fois à ladite pluralité desdites parties de conducteur (33a) disposées au niveau de la circonférence interne dudit enroulement de stator et à la circonférence interne dudit noyau de stator (32).

3. Alternateur tel que revendiqué dans la revendication 1, dans lequel ledit moyen (11) destiné à fournir de l'air de refroidissement comporte une pluralité de pales disposées au niveau d'une extrémité dudit rotor (3) radialement à l'intérieur des extrémités de bobine respectives.

4. Alternateur tel que revendiqué dans l'une des revendications précédentes, dans lequel ladite pluralité desdites parties de conducteur (33a), disposées au niveau de la circonférence interne dudit enroulement de stator et s'étendant à partir de l'autre extrémité dudit noyau de stator (32) opposée à l'extrémité, s'étendent dans la direction entre ladite direction axiale donnée et la direction (R) de rotation du rotor.

5. Alternateur tel que revendiqué dans l'une des revendications précédentes, dans lequel lesdits passages de refroidissement sont agencés de manière. à aspirer l'air de refroidissement de façon unidirectionnelle.

6. Alternateur tel que revendiqué dans l'une des revendications précédentes, dans lequel l'une desdites parties de conducteur (33a, 33b) est disposée dans chacune desdites fentes (35).

7. Alternateur tel que revendiqué dans la revendication 1, dans lequel :
lesdites parties de conducteur (33a, 33b) sont disposées dans des couches interne et externe dans lesdites fentes respectivement ;
chacune de ladite pluralité de parties de conducteur (33a) disposées au niveau de ladite circonférence interne dudit enroulement de stator est connectée à une partie de conducteur respective de ladite pluralité de parties de conducteur (33b) disposées au niveau de ladite circonférence externe dudit enroulement de stator ; et
chacune de ladite pluralité de parties de conducteur (33a) disposées au niveau de ladite circonférence interne dudit enroulement de stator est disposée dans ladite couche interne de l'une desdites fentes et sa partie de conducteur respective de ladite pluralité de parties de conducteur (33b) disposées au niveau de ladite circonférence externe dudit enroulement de stator est disposée dans ladite couche externe d'une autre fente desdites fentes (35).

8. Alternateur tel que revendiqué dans l'une des revendications précédentes, dans lequel :
ledit rotor (3) est un rotor à champ magnétique (3) ayant un noyau magnétique (7) et une bobine de champ (8) ; et
ledit stator (2) comporte un enroulement de stator multi-phase disposé dans lesdites fentes (35).

9. Alternateur tel que revendiqué dans l'une des revendications précédentes, dans lequel ledit moyen destiné à fournir de l'air de refroidissement comprend des ventilateurs de refroidissement (11, 12) ayant une pluralité de pales de ventilateur (111, 112) disposées respectivement sur des extrémités opposées dudit rotor (3).

10. Alternateur tel que revendiqué dans la revendication 9, dans lequel une pluralité (111) desdites pales de ventilateur (111, 112) d'un ventilateur desdits ventilateurs de refroidissement (11, 12) sont inclinées à un angle aigu par rapport à l'axe dudit rotor (3) pour entraîner l'air de refroidissement à la fois dans les directions axiale et radiale.

11. Alternateur tel que revendiqué dans la revendication 9 ou 10, dans lequel ladite poulie (20) est disposée sur le même côté que ledit ventilateur desdits ventilateurs de refroidissement (11, 12).

12. Alternateur tel que revendiqué dans la revendication 9 ou 10, dans lequel ladite poulie (20) est disposée sur le côté opposé dudit ventilateur desdits ventilateurs de refroidissement (11, 12).

13. Alternateur tel que revendiqué dans l'une des revendications précédentes, dans lequel :
chaque segment de conducteur est constitué d'une paire desdites parties de conducteur (33a, 33b) ;
lesdites parties de conducteur (33a, 33b) sont disposées dans lesdites fentes (35) dans des couches annulaires autour de l'axe (6) dudit rotor (3) ; et
des parties de conducteur respectives (33a, 33b) de chaque paire desdites parties de conducteur (33a, 33b) sont disposées dans des couches annulaires adjacentes desdites couches annulaires et dans différentes fentes (35).

14. Alternateur tel que revendiqué dans la revendication 13, dans lequel lesdites parties de conducteur respectives (33a, 33b) de chaque paire desdites parties de conducteur (33a, 33b) sont connectées par l'intermédiaire d'une partie de demi-tour (33c).

15. Alternateur tel que revendiqué dans la revendication 13, dans lequel :
chaque paire desdites parties de conducteur (33a, 33b) est connectée, par l'intermédiaire de ses parties de jonction respectives (33d), à une partie de conducteur (33a, 33b) appartenant à une autre paire desdites parties de conducteur (33a, 33b) et disposée dans une couche annulaire adjacente desdites couches annulaires, formant ainsi une pluralité de parties de jonction (33d) ; et
lesdites parties de jonction (33d) sont disposées en étant espacées et séparées les unes des autres dans la direction circonférentielle.

16. Alternateur tel que revendiqué dans l'une des revendications précédentes, dans lequel :
une paire desdites parties de conducteur (33a, 33b) est disposée dans des couches interne et externe dans lesdites fentes (35),
lesdites fentes (35) sont disposées à un angle électrique de 30° et groupées en des premier et deuxième groupes de fentes (35) l'un à côté de l'autre,
des parties desdites parties de conducteur (33a, 33b) dans ledit premier groupe de fentes composé de fentes (35) espacées d'un pas de fente les unes des autres sont connectées en série pour former un premier groupe connecté en série,
d'autres parties desdites parties de conducteur (33a, 33b) dans ledit deuxième groupe de fentes sont connectées en série pour former un deuxième groupe connecté en série, et
un premier enroulement de phase est composé desdits premier et deuxième groupes connectés en série l'un à l'autre.
